# EUROPÄISCHE PATENTANMELDUNG

(11) **EP 4 575 451 A1**
(43) Veröffentlichungstag der Anmeldung: **25.06.2025**
(21) Anmeldenummer: 24215888.9
(22) Anmeldetag: 27.11.2024
(51) Int. Cl.: G01M 17/007

(54) **ROLLENVORRICHTUNG**

(30) Priorität: 21.12.2023 DE 102023136191
(71) Anmelder: Speiser, Richard, 87490 Börwang (DE)
(72) Erfinder: Speiser, Richard, 87490 Börwang (DE)
(74) Vertreter: VKK Patentanwälte PartG mbB

(57) **Zusammenfassung**

Die vorliegende Erfindung betrifft eine Rollenvorrichtung für ein einspuriges Fahrzeug, aufweisend mindestens eine um eine erste Walzenachse rotatorisch gelagerte erste Walze, eine Aufnahmeeinheit zur Aufnahme der mindestens einen ersten Walze und mindestens eine Befestigungseinheit, wobei die mindestens eine Befestigungseinheit jeweils mindestens eine Radaufnahme zur Befestigung des einspurigen Fahrzeugs an der Rollenvorrichtung aufweist, wobei im Benutzungsfall mindestens ein erstes Rad des einspurigen Fahrzeugs eine Walzenumfangsfläche der mindestens einen ersten Walze entlang einer im Wesentlichen parallel zur ersten Walzenachse orientierten Kontaktlinie berührt, wobei die mindestens eine Befestigungseinheit jeweils mindestens ein Gelenk aufweist, sodass die mindestens eine Radaufnahme relativ zur Aufnahmeeinheit mindestens entlang einer ersten Schwenkachse beweglich gelagert ist, wobei die erste Schwenkachse senkrecht zur ersten Walzenachse orientiert ist und die Kontaktlinie schneidet.

## Beschreibung

Die vorliegende Erfindung betrifft eine Rollenvorrichtung für ein einspuriges Fahrzeug, aufweisend mindestens eine um eine erste Walzenachse rotatorisch gelagerte erste Walze, eine Aufnahmeeinheit zur Aufnahme der mindestens einen ersten Walze und mindestens eine Befestigungseinheit, wobei die mindestens eine Befestigungseinheit jeweils mindestens eine Radaufnahme zur Befestigung des einspurigen Fahrzeugs an der Rollenvorrichtung aufweist, wobei im Benutzungsfall mindestens ein erstes Rad des einspurigen Fahrzeugs eine Walzenumfangsfläche der mindestens einen ersten Walze entlang einer im Wesentlichen parallel zur ersten Walzenachse orientierten Kontaktlinie berührt.

Zur Optimierung der Abstimmung sämtlicher Einheiten eines einspurigen Fahrzeugs mit oder ohne zusätzlichen Antrieb sind Rollenvorrichtungen bekannt, mit denen reales Fahren ortsfest simuliert wird. Unter einspurigen Fahrzeugen werden Zweiräder wie Fahrräder und Motorräder sowie solche mit drei Rädern verstanden, welche im Stand und ohne auftretende Kreiselkräfte keine Eigenstabilität aufweisen und daher kippen würden. Zur Abstimmung werden insbesondere über Sensoren erfasste Messwerte in Echtzeit verarbeitet und angezeigt. Es ist bekannt, bei Fahrzeugen während einer Straßenfahrt mit einer Sensorbox Messwerte aufzunehmen. Nachteilig daran ist der konstruktive Aufwand der Echtzeitmessung und dass Sensoren, einspuriges Fahrzeug und Fahrer den oftmals nicht ungefährlichen und nicht konstanten Umwelteinflüssen ausgesetzt sind, was zu signifikanten Messabweichungen, Beschädigungen oder gar Verletzungen führen kann. Generell werden derartige Rollenvorrichtungen insbesondere zur Prüfung von Fahrzeugen oder gemeinsam mit einem entsprechenden auf der Vorrichtung angeordneten Fahrzeug als Simulator verwendet.

Während einer realen Kurvenfahrt sowie beim starken Beschleunigen oder Abbremsen von einspurigen Fahrzeugen ändern sich Position und Auflage der Räder, wodurch sich Stabilität und Sicherheit des einspurigen Fahrzeugs erheblich ändern. Bekannte Rollenvorrichtungen weisen eine Scheitelrolle auf, auf der das einspurige Fahrzeug mittels Befestigungseinheiten, insbesondere mittels Bändern, Spanngurten oder pneumatisch fest positioniert ist. Bekannt sind auch Doppelrollenvorrichtungen, bei welchen ein Rad in einem Freiraum zwischen zwei Walzen aufgenommen wird, was dessen Positionierung erleichtert. Diese nutzen ebenfalls die erwähnten Befestigungseinheiten zur festen Positionierung des Fahrzeugs auf der Vorrichtung.

Generell nachteilig an diesen bekannten Rollenvorrichtungen mit fester Positionierung des einspurigen Fahrzeugs sind die Verfälschungen der Ergebnisse im Vergleich zu einer realen Testfahrt.

Der vorliegenden Erfindung liegt daher die Aufgabe zugrunde, eine Rollenvorrichtung mit besonders realitätsnahen Bedingungen und demnach möglichst realitätsnahen Testergebnissen sowie mit einer möglichst hohen Anzahl an unterschiedlichen durchführbaren Testfällen anzugeben.

Die Aufgabe wird gelöst durch eine Rollenvorrichtung für ein einspuriges Fahrzeug, aufweisend mindestens eine um eine erste Walzenachse rotatorisch gelagerte erste Walze, eine Aufnahmeeinheit zur Aufnahme der mindestens einen ersten Walze und mindestens eine Befestigungseinheit, wobei die mindestens eine Befestigungseinheit jeweils mindestens eine Radaufnahme zur Befestigung des einspurigen Fahrzeugs an der Rollenvorrichtung aufweist, wobei im Benutzungsfall mindestens ein erstes Rad des einspurigen Fahrzeugs eine Walzenumfangsfläche der mindestens einen ersten Walze entlang einer im Wesentlichen parallel zur ersten Walzenachse orientierten Kontaktlinie berührt, wobei die mindestens eine Befestigungseinheit jeweils mindestens ein Gelenk aufweist, sodass die mindestens eine Radaufnahme relativ zur Aufnahmeeinheit mindestens entlang einer ersten Schwenkachse beweglich gelagert ist, wobei die erste Schwenkachse senkrecht zur ersten Walzenachse orientiert ist und die Kontaktlinie schneidet.

Die mindestens eine erste Walze ist bevorzugt austauschbar an der Aufnahmeeinheit angeordnet, sodass je nach Testfall verschiedene Walzen, die beispielsweise verschiedene Untergrundverhältnisse simulieren, verwendet werden können. Sämtliche erste Walzen weisen dabei vorteilhafterweise einen identischen gemittelten Durchmesser auf, sodass die verschiedenen Walzen einheitlich in einer identischen Aufnahme der Aufnahmeeinheit befestigbar sind. Die Rollenvorrichtung weist bevorzugt eine erste Walze auf, welche als Scheitelrolle ausgebildet ist. Die Ausbildung der Rollenvorrichtung als Doppelrollenvorrichtung in der eingangs genannten Form mit zwei ersten Walzen ist ebenfalls eine Ausgestaltung der Erfindung. Die mindestens eine erste Walze weist bevorzugt eine im Wesentlichen zylindrische Form auf, wobei die Walzenumfangsfläche zwischen ihren beiden Stirnseiten auch konvex bzw. konkav ausgebildet sein kann. Je nach Ausbildung der mindestens einen ersten Walze mit einer zylindrischen, konvexen oder konkaven Walzenumfangsfläche ist die parallele Orientierung der Kontaktlinie zur ersten Walzenachse derart zu verstehen, dass sich die Kontaktlinie entlang der ersten Walzenachse auf der Walzenumfangsfläche gerade bzw. gekrümmt erstreckt. Die Kontaktlinie bildet dabei stets den kürzesten Abstand zwischen den Stirnseiten der mindestens einen ersten Walze.

Die Aufnahmeeinheit ist insbesondere aus einem Rahmen und daran angeordneten Abdeckungen gebildet, wobei eine Aufnahme für die mindestens eine erste Walze an dem Rahmen montiert oder durch diesen gebildet ist. Sowohl Rahmen, Aufnahme als auch Abdeckungen sind bevorzugt aus einem Metall, insbesondere Aluminium, Stahl oder Edelstahl, jedoch sind auch andere Materialien geeignet, insbesondere Carbon.

Die Befestigungseinheit ist bevorzugt unmittelbar und bevorzugt reversibel an der Aufnahmeeinheit montiert. Die Befestigungseinheit kann auch als Einzelteil bzw. als Zusatzteil zur Bestückung bereits bestehender Rollenvorrichtungen ausgebildet sein. Die Montage der Befestigungseinheit erfolgt insbesondere über Klemm-, Schraub- oder Hakenverbindungen an der Aufnahmeeinheit, kann dort aber auch irreversibel befestigt sein, insbesondere stoffschlüssig beispielsweise durch Kleben, Löten oder Schweißen. In besonders vorteilhafter Weise weist die Aufnahmeeinheit an den Positionen zur Montage der Befestigungseinheit Verstärkungen auf, um die an der Befestigungseinheit auftretenden Kräfte besser aufnehmen zu können. Bevorzugt ist das einspurige Fahrzeug im Benutzungsfall ausschließlich über die mindestens eine Befestigungseinheit an der Rollenvorrichtung befestigt. Die Befestigungseinheit weist mindestens eine Radaufnahme, mindestens ein Gelenk und Befestigungsmittel auf, wobei die Befestigungsmittel starr und unmittelbar mit der Aufnahmeeinheit verbunden sind. Das mindestens eine Gelenk ist vorteilhaft zwischen der mindestens einen Radaufnahme und den Befestigungsmitteln angeordnet, sodass diese relativ beweglich zueinander, insbesondere entlang einer ersten Schwenkachse sind. Das Gelenk kann bevorzugt auch aus mehreren Gelenkmitteln, welche jeweils mindestens einen Freiheitsgrad haben, ausgebildet sein. Die Befestigungseinheit kann weiter Arretierungsmittel zum Arretieren des mindestens einen Gelenks aufweisen, sodass die Radaufnahme relativ zur Aufnahmeeinheit unbeweglich positioniert wird. Ein Arretieren des mindestens einen Gelenks ist insbesondere während eines Testaufbaus und zur Anbringung von Sensoren an dem einspurigen Fahrzeug hilfreich.

In einer besonders bevorzugten Ausführungsform der Erfindung ist die Befestigungseinheit mindestens teilweise als eine Greifrobotereinheit ausgebildet. Ein Vorteil einer derartigen Ausbildung ist die besonders leichte Justierung der Befestigungseinheit je nach den individuellen Maßen eines im Nutzungsfall auf der Rollenvorrichtung zu befestigenden einspurigen Fahrzeugs.

Das Gelenk ist derart ausgebildet, dass es eine Rotations- bzw. eine Schwenkbewegung der Radaufnahme mindestens um die erste Schwenkachse ermöglicht. Demnach ist die Orientierung der Schwenkachse über die Position des Gelenks an der Rollenvorrichtung definiert, wobei das Gelenk in vorteilhafter Weise in seiner vertikalen Positionierung in einem Bereich liegt, welcher zwischen der Kontaktlinie und einer Radachse eines ersten Rades des einspurigen Fahrzeuges definiert ist und die vertikale Position der Kontaktlinie und der Radachse miteinschließt.

Bevorzugt wird ein einspuriges Fahrzeug im Benutzungsfall auf die Rollenvorrichtung über eine abnehmbare Rampe gefahren, bis das mindestens eine erste Rad auf der ersten Walze positioniert ist. Die mindestens eine Befestigungseinheit kann während des Befahrens der Rollenvorrichtung mit dem einspurigen Fahrzeug bereits an der Aufnahmeeinheit montiert sein oder nachträglich montiert werden. Sobald das einspurige Fahrzeug auf der Rollenvorrichtung positioniert und die mindestens eine Befestigungseinheit an der Rollenvorrichtung montiert sind, wird das mindestens eine erste Rad in der mindestens einen Radaufnahme aufgenommen, zentriert und rotatorisch gelagert an dieser gehalten.

In einer vorteilhaften Ausgestaltung der Erfindung ist vorgesehen, dass die Kontaktlinie und die erste Schwenkachse in einer gemeinsamen im Wesentlichen horizontalen Kontaktebene liegen. Hierdurch ist ein Schwenken des einspurigen Fahrzeugs ohne Verrutschen auf der ersten Walze möglich, so dass eine Kurvenfahrt möglichst realitätsnah simulierbar ist. Unter im Wesentlichen horizontal wird im Rahmen dieser Patentanmeldung eine Abweichung von einer globalen horizontalen Geraden von maximal bis zu +/- 60°, bevorzugt +/- 45°, besonders bevorzugt +/- 30° verstanden. Bei der Ausbildung einer konvexen oder konkaven Walzenumfangsfläche würde die Kontaktebene als eine entlang der Walzenumfangsfläche gekrümmte Ebene ausgebildet sein, welche sich in Richtung der ersten Schwenkachse, also insbesondere senkrecht zur ersten Walzenachse, erstreckt.

In Weiterbildung der Erfindung ist vorgesehen, dass das mindestens eine Gelenk als Kugelgelenk ausgebildet ist. Ein erster Gelenkteil ist fest mit der Radaufnahme und ein zweiter Gelenkteil fest mit den Befestigungsmitteln verbunden. Die mindestens eine Radaufnahme ist somit potentiell in sämtliche Richtungen verschwenkbar und rotierbar. Erfindungsgemäß sind jedoch auch andere Gelenkformen und - kombinationen, solange diese eine Lageveränderung in sämtliche Richtungen ermöglichen.

Die mindestens eine Radaufnahme ist in einer bevorzugten Weiterbildung der Erfindung als eine, im Benutzungsfall an einer Radachse des einspurigen Fahrzeugs angreifende, Gabel ausgebildet, wobei die Radachse rotatorisch an der mindestens einen Radaufnahme gelagert ist. Anstelle einer Gabel ist auch eine einarmige Radaufnahme vorteilhaft, um einen möglichst großen Zugang zur Radachse beizubehalten. Die Gabel ist bevorzugt so ausgebildet, dass sie mindestens zwei, von einem Gabelstab in eine identische Richtung weg erstreckende, Gabelschenkel aufweist, die zwischen sich einen Freiraum bilden, in dem das Rad aufnehmbar ist. Der Gabelstab weist an seinem, von den Gabelschenkeln wegweisenden Ende den ersten Gelenkteil auf, insbesondere eine Gelenkkugel oder einen Gelenkteller eines Kugelgelenks auf. Die Gabelschenkel weisen an ihren von dem Gabelstab wegweisenden Enden jeweils ein Lager zur Lagerung einer Radachse auf. Durch die rotatorisch bewegliche Anordnung der Radachse an der Radaufnahme sind weitere Freiheitsgrade freigegeben, so dass das einspurige Fahrzeug während eines Tests so gering wie möglich in seiner Bewegungsfreiheit begrenzt ist. Sofern das einspurige Fahrzeug eine hohle Achse an seinem Rad aufweist, kann in diese ein Stab eingeführt werden, welcher seinerseits wiederum an den Gabelschenkeln rotierbar gelagert werden kann und als Radachse dient. Die Lagerung an den Gabelschenkelenden erfolgt insbesondere über ein Gleit- oder ein Wälzläger. Darüber hinaus können die von dem Gabelstab wegweisenden Enden der Gabelschenkel derart ausgebildet sein, dass sie an einem feststehenden Bereich eines Radiallagers des ersten Rades angreifen und an diesen geklemmt sind. In besonders vorteilhafter Weise ist der Freiraum zwischen den Gabelschenkeln erweiterbar bzw. verengbar, um diesen an eine Radbreite von Rädern des einspurigen Fahrzeugs anpassen zu können. Weiter kann die Befestigungseinheit Distanzhülsen aufweisen, welche einen Abstand innerhalb des Freiraums zwischen Gabelschenkeln und einem ersten Rad ausgleichen, um eine stabile Anordnung zu erhalten. Die Radaufnahme weist in einer besonders bevorzugten Ausführungsform lineare Verlängerungsmittel, insbesondere teleskopisch oder differential geführte Verlängerungsmittel auf, sodass eine Schwenkbewegung des einspurigen Fahrzeugs um einen von der Radachse abweichenden Schwenkpunkt möglich ist, wie es insbesondere beim Abheben des Hinterrades während einer sehr starken Bremsung der Fall sein kann. Die Verlängerungsmittel sind bevorzugt innerhalb des Gabelstabes und/oder der Gabelschenkel integriert und verlängern bzw. verkürzen die axiale Länge der Radaufnahme.

Darüber hinaus ist die mindestens eine Befestigungseinheit, insbesondere das mindestens eine Gelenk und die mindestens eine Radaufnahme, über eine Linearführung im Wesentlichen parallel zur ersten Walzenachse verschiebbar gelagert. Die Linearführung ist insbesondere mittels Gleit- oder Wälzlager, wie Kugellager gebildet, sodass ein möglichst geringer Widerstand bei einem Verschieben der Befestigungseinheit zu überwinden ist. Hierdurch ist das Wegrutschen eines Rades simulierbar und die diesbezüglich sicherheitstechnische Ausrüstung des einspurigen Fahrzeugs testbar. Die Linearführung ist ein Teil der Befestigungseinheit und mittelbar über diese oder unmittelbar an der Aufnahmeeinheit montiert. Die Linearführung weist weiter Arretierungsmittel zum Arretieren der Befestigungseinheit, bzw. des mindestens einen Gelenks und der mindestens einen Radaufnahme an einer bestimmten Position entlang der Linearführung auf. Auch eine gestufte oder stufenlose Arretierung über die Arretierungsmittel entlang der Linearführung ist Teil der Ausgestaltung der Erfindung, wobei die Arretierungsmittel insbesondere form- und/oder kraftschlüssig Befestigungseinheit und Aufnahmeeinheit, bzw. Gelenk und Radaufnahme mit den Befestigungsmitteln verbinden. In einer besonders vorteilhaften Ausführungsform weist die Rollenvorrichtung mehrere Linearführungen zum Verschieben in verschiedene Richtungen auf, sodass je nach einspurigem Fahrzeug und Walze, die Position der Befestigungseinheit bzw. des Gelenks und der Radaufnahme individuell einstellbar sind.

In Weiterbildung der Erfindung ist vorgesehen, dass die mindestens eine Befestigungseinheit Trägheitsmittel aufweist, wobei die Trägheitsmittel jeweils an der mindestens einen Radaufnahme und der Aufnahmeeinheit befestigt sind. Die Trägheitsmittel sind bevorzugt als Feder-Dämpfer-System ausgebildet, um möglichst reale Trägheiten und die auf ein einspuriges Fahrzeug während einer realen Fahrt auftretenden Fliehkräfte zu simulieren. Darüber hinaus weisen die Trägheitsmittel bevorzugt Sensormittel auf, um die auftretenden Kräfte zu erfassen und damit das Fahrverhalten des einspurigen Fahrzeugs besser zu beurteilen. Federn und Dämpfer der Trägheitsmittel sind einstellbar, sodass diese je nach Art und Gewicht des einspurigen Fahrzeugs und Typ des durchzuführenden Tests angepasst werden können. Der Dämpfer ist hierbei elektrisch, mechanisch, hydraulisch oder pneumatisch einstellbar. Die Federvorspannung ist insbesondere mechanisch justierbar. Insbesondere kann das Trägheitsmittel demnach zusätzlich zur mindestens einen Befestigungseinheit zum stabilen Stand des einspurigen Fahrzeugs beitragen, sofern Feder und Dämpfer maximal steif ausgebildet sind.

In einer bevorzugten Ausgestaltung der Erfindung ist vorgesehen, dass das mindestens eine Gelenk entlang der ersten Schwenkachse vor oder hinter der mindestens einen ersten Walze angeordnet ist. Je nach Anordnung des Gelenks entlang der ersten Schwenkachse besteht die Möglichkeit, das einspurige Fahrzeug insbesondere entlang weiterer Schwenkachsen beweglich zu lagern, sodass das Fahrverhalten bei abhebendem Vorder- oder Hinterrad beobachtet werden kann. Die Befestigungseinheit kann bevorzugt an einer Vielzahl von Position an der Aufnahmeeinheit montiert sein, um entsprechend geforderte Freiheitsgrade je nach Testfall sperren oder freizugeben.

In besonders vorteilhafter Weise ist mindestens eine zweite Walze rotierbar um eine parallel zur ersten Walzenachse orientierte zweite Walzenachse an der Aufnahmeeinheit gelagert, wobei die mindestens eine zweite Walze über Übertragungsmittel derart mit der mindestens einen ersten Walze verbunden ist, dass sämtliche Walzen dieselbe Umfangsgeschwindigkeit aufweisen. Die mindestens eine zweite Walze ist insbesondere entlang der ersten Schwenkachse verschiebbar an der Aufnahmeeinheit gelagert, sodass ein Walzenabstand zwischen erster und zweiter Walze auf ein auf der Rollenvorrichtung befindliches, einspuriges Fahrzeug angepasst werden kann. Die Übertragungsmittel sind insbesondere durch Riemen, Ketten und/oder Zahnräder gebildet. Eine ggf. vorhandene Übersetzung zwischen den Walzen ist bevorzugt derart gewählt, dass sie im Wesentlichen dieselbe Umfangsgeschwindigkeit aufweisen. Sofern sämtliche Walzen einen identischen Durchmesser aufweisen, ist das Übersetzungsverhältnis 1. Die Übertragungsmittel sind für einen Nutzer nicht ohne weiteres zugänglich innerhalb der Aufnahmeeinheit angeordnet. Ein Antrieb der mindestens einen zweiten Walze über zusätzliche Antriebsmittel mit einer identischen Umfangsgeschwindigkeit wie die der mindestens einen ersten Walze kann ebenfalls vorgesehen sein. In einer besonders vorteilhaften Ausführungsform weist die Rollenvorrichtung neben einer zweiten Walze eine zweite Befestigungseinheit auf, welche mindestens ein im Nutzungsfall die zweite Walze kontaktierendes, zweites Rad an der Rollenvorrichtung befestigt. Die konkreten baulichen Maße einer zweiten Befestigungseinheit können je nach Art und Unterscheidung der Räder des einspurigen Fahrzeugs zu denen der ersten Befestigungseinheit variieren. Durch die Anordnung von mindestens einer ersten und mindestens einer zweiten Walze können sämtliche Räder des einspurigen Fahrzeugs während eines Testfalls in Rotation versetzt werden, sodass insbesondere ein Antiblockiersystem des einspurigen Fahrzeugs getestet werden kann.

In einer Weiterbildung der Erfindung ist vorgesehen, dass an der Aufnahmeeinheit mindestens zwei Anschläge zur Begrenzung eines Schwenkwinkels α der Radaufnahme um mindestens die erste Schwenkachse angeordnet sind. Die Anschläge sind derart angeordnet, dass sie jeweils eine maximale Auslenkung der Radaufnahme ausgehend von einer zentrierten Nullstellung begrenzen und so ein Kippen des an der Radaufnahme im Nutzungsfall befestigten einspurigen Fahrzeugs verhindern, um damit Beschädigungen und Verletzungen des Personals vorzubeugen. Die Anschläge sind bevorzugt pfostenartig und insbesondere aus einem Metall, bevorzugt aus einem Stahl oder Edelstahl, oder einem Carbonmaterial gebildet, um möglichst hohen Stößen standzuhalten. Darüber hinaus sind die Anschläge insbesondere eine kraftschlüssige oder formschlüssige Befestigung der Anschläge an der Aufnahmeeinheit ist ebenfalls insbesondere mittels Schraub-, Niet-, Klemm, oder Bajonettverbindungen umsetzbar. Die Anschläge weisen in vorteilhafter Weise an ihren der Radaufnahme zuweisenden Enden Dämpfer, insbesondere aus eine Kunststoff oder Gummi, auf, um den Aufprall der Radaufnahme auf einem der Anschläge zu dämpfen und demnach eine Beschädigung beider Komponenten sowie die Geräuschkulisse zu minimieren. Ein maximaler Schwenkwinkel α beträgt mindestens 45°, bevorzugt 60°, besonders bevorzugt 75°. In einer besonders vorteilhaften Ausgestaltung der Erfindung sind die zwei Anschläge über der Trägheitsmittel realisiert, sodass diese beide funktionalen Eigenschaften aufweisen, wonach eine Vielzahl an zusätzlichen Komponenten und demnach auch Kosten gespart sind.

Die Erfindung wird in einer bevorzugten Ausführungsform unter Bezugnahme auf die Figuren beispielhaft beschrieben, wobei weitere vorteilhafte Einzelheiten den Figuren zu entnehmen sind.

Funktionsmäßig gleiche Teile sind dabei mit demselben Bezugszeichen versehen.

Die Figuren zeigen im Einzelnen:
- **Figur 1**: Seitenansicht einer Rollenvorrichtung;
- **Figur 2**: perspektivische Ansicht einer Befestigungseinheit;
- **Figur 3**: perspektivische Ansicht einer Rollenvorrichtung.

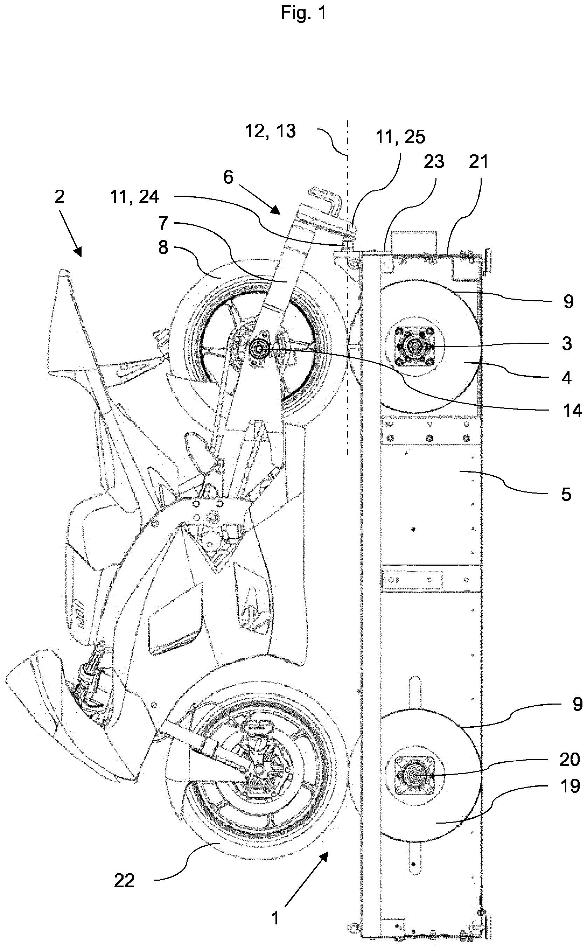

**Figur 1** zeigt eine Seitenansicht einer Rollenvorrichtung 1 mit einem in einem Benutzungsfall auf der Rollenvorrichtung 1 angeordneten einspurigen Fahrzeug 2, welches in diesem Ausführungsbeispiel als Motorrad ausgebildet ist. Die Rollenvorrichtung 1 weist eine Aufnahmeeinheit 5 in Form eines mehrstückigen Metallrahmens auf, an welcher eine erste Walze 4 und eine zweite Walze 19 rotierbar gelagert sind, wobei die erste Walze 4 um eine erste Walzenachse 3 rotierbar gelagert und die zweite Walze 19 um eine zweite Walzenachse 20 rotierbar gelagert ist. Die erste und die zweite Walzenachse 3, 20 sind in der Seitenansicht nach **Fig. 1** senkrecht zur Zeichenebene orientiert. Die erste und die zweite Walzenachse 3, 20 sind parallel zueinander und in einer im Wesentlichen horizontalen gemeinsamen Ebene angeordnet. An einem Endbereich 21 der Aufnahmeeinheit 5 ist eine Befestigungseinheit 6 abnehmbar - insbesondere über eine Schraubverbindung kraftschlüssig - an der Aufnahmeeinheit 5 montiert. Die Befestigungseinheit 6 weist eine gabelförmige Radaufnahme 7, ein Gelenk 11 und Befestigungsmittel 23 auf, wobei die Befestigungsmittel 23 starr und unmittelbar mit der Aufnahmeeinheit 5 im Benutzungsfall verbunden sind. Das Gelenk 11 der Befestigungseinheit 6 ist derart zwischen Radaufnahme 7 und Befestigungsmitteln 23 angeordnet, dass die Radaufnahme 7 über das Gelenk 11 relativ zur Aufnahmeeinheit 5 schwenkbar ist. Demnach ist ein erster Gelenkteil, nämlich eine Gelenkkugel 24 mit den Befestigungsmitteln 23 und ein zweiter Gelenkteil, nämlich ein Gelenkteller 25 mit der Radaufnahme 7 im Wesentlichen starr verbunden. Die Radaufnahme 7 ist rotatorisch mit einer Radachse 14 eines ersten Rades 8 des einspurigen Fahrzeuges 2 verbunden. Das erste Rad 8 liegt auf einer Walzenumfangsfläche 9 der ersten Walze 4 entlang einer Kontaktlinie 10 auf, welche im Wesentlichen parallel zur ersten Walzenachse 3 und der Radachse 14 und damit senkrecht zur Zeichenebene orientiert ist. Das Gelenk 11 ist derart ausgerichtet und positioniert, dass es eine Schwenkbewegung der Radaufnahme 7 und somit des ersten Rades 8 und des gesamten einspurigen Fahrzeuges 2 um eine erste Schwenkachse 12 zulässt, wobei diese erste Schwenkachse 12 in einer im Wesentlichen horizontalen Kontaktebene 13 liegt und perpendikular zu der Kontaktlinie 10 orientiert ist. Ein zweites Rad 22 des einspurigen Fahrzeuges 2 liegt auf einer Walzenumfangsfläche 9 der zweiten Walze 19 auf.

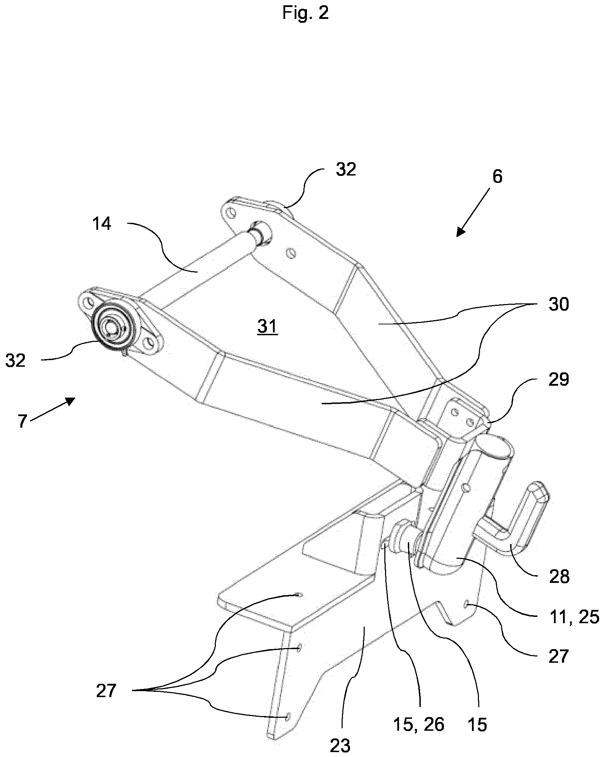

**Figur 2** zeigt eine perspektivische Ansicht einer Befestigungseinheit 6 mit einem Gelenk 11, welches zwischen Radaufnahme 7 und Befestigungsmittel 23 angeordnet ist. Das Gelenk 11 ist innerhalb dieser Ausführungsform als Kugelgelenk ausgebildet, sodass möglichst viele Freiheitsgrade über ein einziges Gelenk 11 freigegeben sind. Die nicht sichtbare Gelenkkugel 24 des Gelenks 11 ist von dem Gelenkteller 25 zu mindestens 50% ihrer Umfangsfläche umgeben und derart an den Befestigungsmitteln 23 angeordnet, dass die Gelenkkugel 24 und somit das Gelenk 11 und die Radaufnahme 7 parallel zur nicht dargestellten ersten Walzenachse 3 mittels einer Linearführung 15 axial verschiebbar sind, um das nicht dargestellte einspurige Fahrzeug 2 möglichst individuell auf der Rollenvorrichtung 1 positionieren zu können. Dabei wird die Gelenkkugel 24 des Gelenks 11 über die aus einem Langloch 26 und einer Schraubverbindung gebildete Linearführung 15 an den Befestigungsmitteln 23 verklemmt. Die Befestigungsmittel 23 sind einstückig als Blechbiegeteil ausgebildet und weisen Öffnungen 27 zur Fixierung an der nicht dargestellten Aufnahmeeinheit 5 über Schrauben, Nieten oder Bolzen auf. Der Gelenkteller 25 des Gelenks 11 ist starr mit der Radaufnahme 7 verbunden, sodass die Kräfte direkt übertragbar sind. Über einen Griffhebel 28 kann der Gelenkteller 25 und somit die Radaufnahme 7 von der Gelenkkugel 24 und somit den Befestigungsmitteln 23 reversibel gelöst und aufgesteckt werden. Die Radaufnahme 7 ist gabelförmig ausgebildet und weist zwei von einem Gabelstab 29 in eine identische Richtung weg erstreckende Gabelschenkel 30 auf, die zwischen sich einen Freiraum 31 bilden, in dem das nicht dargestellte erste Rad 8 in einem Benutzungsfall positioniert ist. Der Gabelstab 29 ist ebenfalls mittels Schrauben mit den Gabelschenkeln 30 verbunden, wobei insbesondere über nicht dargestellte Distanzhülsen, welche zwischen Gabelstab 29 und Gabelschenkel 30 eingebracht werden können, die Größe des Freiraums 31 individuell an die Maße des ersten Rades 8 angepasst werden kann. Die Gabelschenkel 30 weisen jeweils an ihren von dem Gabelstab 29 wegweisenden Enden ein Kugellager 32 zur Lagerung eines Stabes auf, welcher in eine nicht dargestellte hohle Achse des ersten Rades 8 eingeführt werden kann und als Radachse 14 dient.

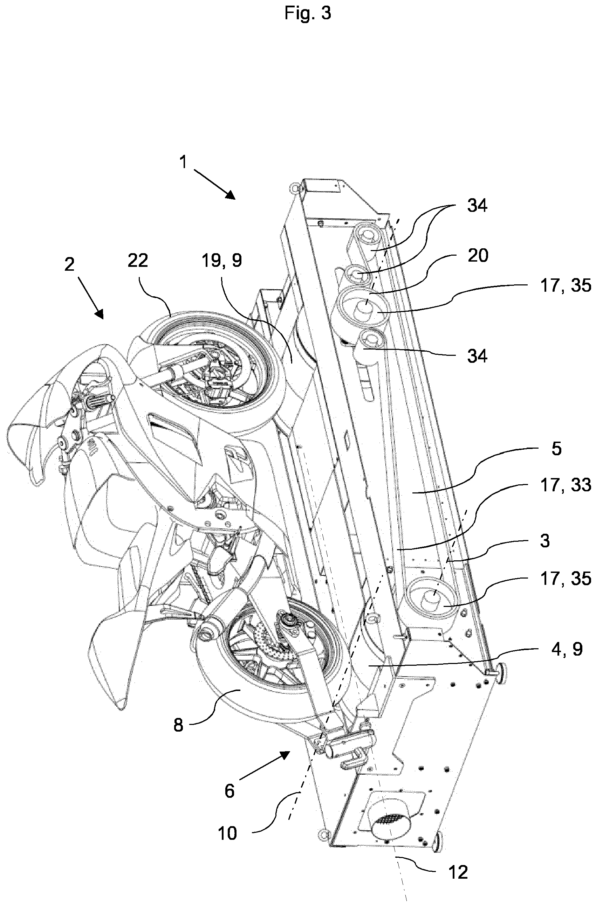

**Figur 3** zeigt eine perspektivische Ansicht einer Rollenvorrichtung 1 mit einem im Benutzungsfall darauf angeordneten einspurigen Fahrzeug 2, wobei das einspurige Fahrzeug 2 in diesem Ausführungsbeispiel als Motorrad ausgebildet ist und mit seinem ersten Rad 8 auf der Walzenumfangsfläche 9 ersten Walze 4 der Rollenvorrichtung 1 aufliegt und dadurch eine im Wesentlichen parallel zur ersten Walzenachse 3 orientierte Kontaktlinie 10 bildet. Das einspurige Fahrzeug 2 ist über die Befestigungseinheit 6 schwenkbar um die Schwenkachse 12 an der Rollenvorrichtung 1 befestigt, wobei die Schwenkachse 12 senkrecht zur ersten Walzenachse 3 orientiert ist und die Kontaktlinie 10 schneidet. Die Schwenkachse 12 liegt in einer im Wesentlichen horizontalen nicht dargestellten Kontaktebene 13. Das zweite Rad 22 des einspurigen Fahrzeuges 2 liegt auf der Walzenumfangsfläche 9 der zweiten Walze 19 der Rollenvorrichtung 1 auf, wobei die zweite Walze 19 im Wesentlichen horizontal linear innerhalb der Aufnahmeeinheit 5 der Rollenvorrichtung 1 verschiebbar ist, sodass ein Abstand zwischen der ersten und zweiten Walzenachse 3, 20 an einen Radstand des einspurigen Fahrzeugs 2 anpassbar ist. Die zweite Walze 19 ist über Übertragungsmittel 17 derart mit der ersten Walze 4 verbunden ist, dass sämtliche Walzen 4, 19 dieselbe Umfangsgeschwindigkeit aufweisen. Die Übertragungsmittel 17 sind in diesem Ausführungsbeispiel als ein, über Walzenrollen 35 umlaufender, Riemen 33 und die Walzenrollen 35 selbst ausgebildet, wobei der Riemen 33 über insgesamt 3 weitere Umlenkrollen 34 geführt und gespannt ist, um unabhängig von der Position der zweiten Walze 19 eine Vorspannung des Riemens 33 zu gewährleisten.

### BEZUGSZEICHENLISTE

- 1: Rollenvorrichtung
- 2: Einspuriges Fahrzeug
- 3: erste Walzenachse
- 4: erste Walze
- 5: Aufnahmeeinheit
- 6: Befestigungseinheit
- 7: Radaufnahme
- 8: erstes Rad
- 9: Walzenumfangsfläche
- 10: Kontaktlinie
- 11: Gelenk
- 12: erste Schwenkachse
- 13: Kontaktebene
- 14: Radachse
- 15: Linearführung

- 17: Übertragungsmittel

- 19: zweite Walze
- 20: zweite Walzenachse
- 21: Endbereich
- 22: zweites Rad
- 23: Befestigungsmittel
- 24: Gelenkkugel
- 25: Gelenkteller
- 26: Langloch
- 27: Öffnung
- 28: Griffhebel
- 29: Gabelstab
- 30: Gabelschenkel
- 31: Freiraum
- 32: Kugellager
- 33: Riemen
- 34: Umlenkrollen
- 35: Walzenrollen

## Patentansprüche

1. Rollenvorrichtung (1) für ein einspuriges Fahrzeug (2), aufweisend mindestens eine um eine erste Walzenachse (3) rotatorisch gelagerte erste Walze (4), eine Aufnahmeeinheit (5) zur Aufnahme der mindestens einen ersten Walze (4) und mindestens eine Befestigungseinheit (6), wobei die mindestens eine Befestigungseinheit (6) jeweils mindestens eine Radaufnahme (7) zur Befestigung des einspurigen Fahrzeugs (2) an der Rollenvorrichtung (1) aufweist, wobei im Benutzungsfall mindestens ein erstes Rad (8) des einspurigen Fahrzeugs (2) eine Walzenumfangsfläche (9) der mindestens einen ersten Walze (4) entlang einer im Wesentlichen parallel zur ersten Walzenachse (3) orientierten Kontaktlinie (10) berührt, **dadurch gekennzeichnet, dass** die mindestens eine Befestigungseinheit (6) jeweils mindestens ein Gelenk (11) aufweist, sodass die mindestens eine Radaufnahme (7) relativ zur Aufnahmeeinheit (5) mindestens entlang einer ersten Schwenkachse (12) beweglich gelagert ist, wobei die erste Schwenkachse (12) senkrecht zur ersten Walzenachse (3) orientiert ist und die Kontaktlinie (10) schneidet.

2. Rollenvorrichtung (1) nach Anspruch 1, **dadurch gekennzeichnet, dass** die Kontaktlinie (10) und die erste Schwenkachse (12) in einer gemeinsamen im Wesentlichen horizontalen Kontaktebene (13) liegen.

3. Rollenvorrichtung (1) nach Anspruch 1 oder 2, **dadurch gekennzeichnet, dass** das mindestens eine Gelenk (11) als Kugelgelenk ausgebildet ist.

4. Rollenvorrichtung (1) nach Anspruch 1, 2 oder 3, **dadurch gekennzeichnet, dass** die mindestens eine Radaufnahme (7) als eine, im Benutzungsfall an einer Radachse (14) des einspurigen Fahrzeugs (2) angreifende, Gabel oder einarmig ausgebildet ist, wobei die Radachse (14) rotatorisch an der mindestens einen Radaufnahme (7) gelagert ist.

5. Rollenvorrichtung (1) nach einem der vorhergehenden Ansprüche, **dadurch gekennzeichnet, dass** die mindestens eine Befestigungseinheit (6), insbesondere das mindestens eine Gelenk (11) und die mindestens eine Radaufnahme (7), über eine Linearführung (15) im Wesentlichen parallel zur ersten Walzenachse (3) verschiebbar gelagert ist.

6. Rollenvorrichtung (1) nach einem der vorhergehenden Ansprüche, **dadurch gekennzeichnet, dass** die mindestens eine Befestigungseinheit (6) Trägheitsmittel aufweist, wobei die Trägheitsmittel jeweils an der mindestens einen Radaufnahme (7) und der Aufnahmeeinheit (5) befestigt sind.

7. Rollenvorrichtung (1) nach einem der vorhergehenden Ansprüche, **dadurch gekennzeichnet, dass** das mindestens eine Gelenk (11) entlang der ersten Schwenkachse (12) vor oder hinter der mindestens einen ersten Walze (4) angeordnet ist.

8. Rollenvorrichtung (1) nach einem der vorhergehenden Ansprüche, **dadurch gekennzeichnet, dass** mindestens eine zweite Walze (19) rotierbar um eine parallel zur ersten Walzenachse (3) orientierte zweite Walzenachse (20) an der Aufnahmeeinheit (5) gelagert ist, wobei die mindestens eine zweite Walze (19) über Übertragungsmittel (17) derart mit der mindestens einen ersten Walze (4) verbunden ist, dass sämtliche Walzen (4, 19) im Wesentlichen dieselbe Umfangsgeschwindigkeit aufweisen.

9. Rollenvorrichtung (1) nach einem der vorhergehenden Ansprüche, **dadurch gekennzeichnet, dass** an der Aufnahmeeinheit (5) mindestens zwei Anschläge zur Begrenzung eines Schwenkwinkels α der Radaufnahme (7) um mindestens die erste Schwenkachse (12) angeordnet sind.
